# EUROPÄISCHE PATENTSCHRIFT

(11) **EP 1 401 632 B1**
(45) Veröffentlichungstag und Bekanntmachung des Hinweises auf die Patenterteilung: **02.11.2006**
(21) Anmeldenummer: 02762294.3
(22) Anmeldetag: 19.06.2002
(51) Int. Cl.: B29C 51/46, B26D 5/00

(54) **Verfahren zum automatischen Einstellen von Maschinenparametern**
Method for automatic input of machine parameters
Procédé pour introduire des paramètres d'une machine automatiquement

(30) Priorität: 20.06.2001 DE 10129392
(43) Veröffentlichungstag der Anmeldung: 31.03.2004
(60) Teilanmeldung: 06014251.0
(73) Patentinhaber: Convenience Food Systems Wallau GmbH & Co.KG, 35216 Biedenkopf Wallau (DE)
(72) Erfinder: MICHEL, Frank, D-35329 Steffenberg (DE)
(74) Vertreter: Wolff, Felix
(86) Internationale Anmeldenummer: PCT/EP2002/006781
(87) Internationale Veröffentlichungsnummer: WO 2003/000481

(56) Entgegenhaltungen:
- EP-A- 1 084 806
- US-A- 5 571 539
- PATENT ABSTRACTS OF JAPAN vol. 011, no. 102 (M-576), 31. März 1987 (1987-03-31) & JP 61 252114 A (JAPAN STEEL WORKS LTD:THE), 10. November 1986 (1986-11-10)
- PATENT ABSTRACTS OF JAPAN vol. 1995, no. 09, 31. Oktober 1995 (1995-10-31) & JP 07 161745 A (HITACHI LTD), 23. Juni 1995 (1995-06-23)

## Beschreibung

Die vorliegende Erfindung betrifft ein Verfahren zum automatischen Einstellen der Maschinenparameter einer Verpackungsmaschine

Verpackungsmaschinen sind heutzutage mit einer Vielzahl von Werkzeugen betreibbar. Beispielsweise ist es aus der Druckschrift US 6,047,579 A1 bekannt, eine Identifikationsinformation an einem Werkzeug einer Pressmaschine vorzusehen und über eine Datenschnittstelle Daten mit der Pressmaschine auszutauschen. Bei einem Wechsel dieser Werkzeuge müssen die Maschinenparameter, wie beispielsweise der untere und obere Totpunkt der Hubvorrichtungen in den Verpackungsmaschinen, aber auch die Kühlung bzw. die Temperatur beim Siegeln neu eingestellt werden. Da dies sehr aufwendig ist, hat man in der Vergangenheit versucht, die Werkzeuge, beispielsweise deren Bauhöhe, zu vereinheitlichen, um den Einstellaufwand zu minimieren. Diese Werkzeuge sind dann jedoch für den jeweiligen Anwendungsfall nicht optimal gestaltet.

Der vorliegenden Erfindung liegt deshalb die Aufgabe zugrunde, Werkzeuge, insbesondere für Verpackungsmaschinen, zur Verfügung zu stellen, die die Nachteile des Standes der Technik nicht aufweisen.

Gelöst wird diese Aufgabe durch ein Verfahren gemäß Patentanspruch 1.

Erfindungsgemäß weist ein Werkzeug demnach einen beschreib- und abfragbaren Datenspeicher auf, auf dem Daten gespeichert sind. Diese Daten können zum einen Daten wie beispielsweise eine Zahlenfolge sein, mit der eine eindeutige Kennung des Werkzeuges möglich ist, so daß eine elektronische Vorrichtung, beispielsweise ein Computer oder ein Prozessleitsystem, die in der Verpackungsmaschine angeordnet ist, zweifelsfrei das Werkzeug identifiziert und dann diesem Werkzeug bestimmte Maschinenparameter zuordnet und diese automatisch entsprechend einstellt.

Ebenfalls erfindungsgemäß weist der Datenspeicher bereits die Sollwerte für die automatische Einstellung der Maschinenparameter auf. Eine elektronische Vorrichtung, beispielsweise ein Computer oder ein Prozessleitsystem, lesen diese Maschinenparameter von dem Datenspeicher und stellen sie automatisch entsprechend ein.

Diese Maschinenparameter können beispielsweise der obere und der untere Totpunkt der Hubvorrichtung, mit der das jeweilige Werkzeug angehoben bzw. abgesenkt wird, die Temperatur auf die das Werkzeug erwärmt oder gekühlt wird sowie der Anpreßdruck, mit dem das Werkzeug gegen ein anderes Werkzeug gedrückt wird, sein.

Vorzugsweise beinhaltet der Datenspeicher Sollwerte für den oberen und besonders bevorzugt zusätzlich für den unteren Totpunkt der Hubvorrichtung.

In einer anderen bevorzugten Ausführungsform beinhaltet der Datenspeicher Kennungsdaten, mit denen eine eindeutige Korrelierung und Einstellung des oberen und vorzugsweise des unteren Totpunktes der Hubvorrichtung möglich ist. Die Korrelationsdaten sind vorzugsweise in einen Computer oder einem Prozessleitsystem gespeichert, der/das mit dem Sensorchip verbunden ist.

Diese beiden bevorzugten Ausführungsformen des erfindungsgemäßen Werkzeuges haben den Vorteil, daß die Höhe des Werkzeuges optimal gestaltet werden kann. Die unterschiedliche Höhe wird dann automatisch durch die Einstellung des oberen und des unteren Totpunktes der Hubvorrichtung kompensiert, Durch das erfindungsgemäße Werkzeug werden lange Umrüstzeiten und insbesondere Fehler bei der Einstellung von Maschinenparametern, die zu einer Beschädigung der Verpackungsmaschine und/oder mangelhaften Produkten führen kann, vermieden.

Bei dem erfindungsgemäßen Werkzeug ist zunächst einmal sichergestellt, daß dessen Ersatz durch ein für die zugehörige Verpackungsmaschine nicht vorgesehenes Werkzeug nicht gelingt, weil in einem solchen Fall der Ist-Sollwert-Vergleich mißlingt und die Verpackungsmaschine überhaupt nicht in Gang setzbar ist. Das trifft sowohl dann zu, wenn ein nicht passendes Werkzeug desselben Herstellers als auch ein Werkzeug eines anderen Herstellers eingebaut worden ist; in beiden Fällen wird der Betreiber auf den Fehler aufmerksam gemacht und eine Fehlfunktion der Maschine wird sicher vermieden.

Zusätzlich ist es nunmehr möglich, daß auch bei solchen Verpackungsmaschinen, bei dem außer dem Werkzeug auch das dazugehörige Gegenstück, beispielsweise der Stempel beim Tiefziehen und/oder das Oberwerkzeug beim Siegeln auswechselbar ist, gewährleistet werden kann, daß nur eine solche Paarung ausgebildet werden kann, bei der die einzelnen Werkzeuge zueinander passend sind. Ist dies nicht der Fall, verhindert die Steuerung der Verpackungsmaschine wiederum deren Inbetriebnahme.

Bei der vorliegenden Erfindung ist es besonders vorteilhaft, wenn der Sensorchip an dem Werkzeug in einem abgeschlossenen Hohlraum vorgesehen ist, so daß er für Unbefugte weder auffindbar ist, noch manipuliert werden kann. Der Chip wird vorteilhafterweise so in dem Hohlraum versenkt, daß er, wenn er zufällig entdeckt wird, beim Ausbau der Datenspeicher unbrauchbar und der Sensorchip zerstört wird. Ebenfalls bevorzugt wird der Sensorchip an einem Werkzeug, vorzugsweise lösbar befestigt.

Die erfindungsgemäßen Werkzeuge können jegliche Werkzeuge sein, die bei einer Maschine, insbesondere einer Verpackungsmaschine auswechselbar sind. Vorzugsweise sind die Werkzeuge jedoch Tiefzieh-, Siegel- oder Schneidwerkzeuge.

Die Datenabfrage aus den in den Werkzeugen integrierten Datenspeichern gelingt bei einer Verpackungsmaschine am besten, wenn der Sensorchip mit einer an der Verpackungsmaschine angeordneten oder mobilen Sende- und Empfangsanlage bidirektional drahtlos gekoppelt ist. Ein weiteren Gegenstand der vorliegenden Erfindung ist deshalb eine solche Verpackungsmaschine.

Vorzugsweise ist die Sende- und Empfangsanlage über einen Verstärker mit einem zweiten Datenspeicher und/oder einer elektronischen Maschinensteuerung, beispielsweise einem Prozessleitsystem, verbunden, so daß der Datenstand des Werkzeug ablesbar gemacht werden kann und die Daten entweder zur Freigabe der Inbetriebnahme der Verpackungsmaschine oder zur automatischen Einstellung von Maschinenparametern herangezogen werden können. Die Sende- und Empfangsanlage ist besonders vorteilhaft in unmittelbarer Nähe des jeweiligen Werkzeuges vorgesehen.

Vorteilhaft kann die Sende- und Empfangsanlage auch mobil ausgebildet sein.

Die erfindungsgemäße Verpackungsmaschine hat den Vorteil, daß die Umrüstzeiten minimal sind, daß bei der Einstellung der Verfahrensparameter keine Fehler passieren können und das Werkzeugpaare, die nicht zusammenpassen, nicht eingesetzt werden können.

Vorzugsweise werden beim Umrüsten der Verpackungsmaschine die Daten des Datenspeichers mindestens eines Werkzeuges abgefragt und dann über die elektronische Steuerung die einstellbaren Maschinenparameter entsprechend der Kennung des Werkzeuges und/oder den gespeicherten Sollwerten automatisch eingestellt.

In einer vorteilhaften Ausführungsform der vorliegenden Erfindung wird über einen Soll-Ist-Vergleich die Einstellung der Maschinenparameter zumindest einmal überprüft. Besonders bevorzugt wird die Einstellung jedoch in regelmäßigen Abständen überprüft, um insbesondere eine gleichbleibende Qualität der hergestellten Produkte sicherzustellen.

Vorzugsweise werden alle Maschinenparameter, die bei einem Werkzeugwechsel eingestellt werden müssen, von der Elektronik der Verpackungsmaschine automatisch eingestellt. Besonders bevorzugt werden jedoch zumindest der obere und der untere Totpunkt der Hubvorrichtung automatisch an das Werkzeug angepaßt.

Im folgenden wird die Erfindung anhand der Figuren 1 bis 3 erläutert, Diese Erläuterungen sind lediglich beispielhaft und schränken den allgemeinen Erfindungsgedanken nicht ein.
- **Figur 1**: zeigt ein erfindungsgemäßes Werkzeug.
- **Figur 2**: zeigt die erfindungsgemäße Verpackungsmaschine.
- **Figur 3**: zeigt die Empfangs- und Verstärkeranlage.

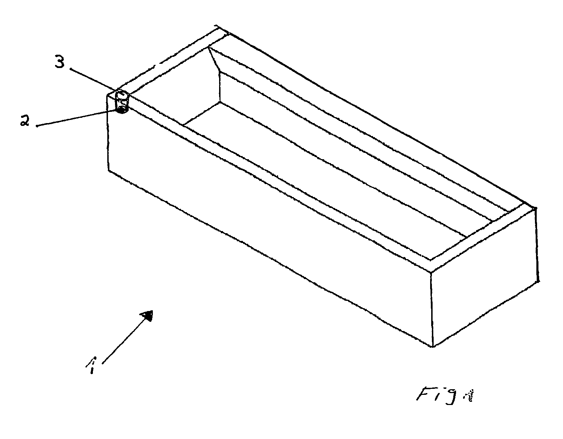

In **Figur 1** ist das erfindungsgemäße Werkzeug 1 dargestellt. In dem vorliegenden Beispiel ist das Werkzeug eine Tiefziehmatrize. Der Fachmann erkennt, daß das erfindungsgemäße Werkzeug genauso gut ein Siegelwerkzeug, ein Schneidwerkzeug oder dergleichen sein kann. In dem Werkzeug 1 ist ein Hohlraum 3 vorgesehen, in dem sich der Sensorchip 2 befindet. Der Hohlraum ist abgeschlossen, so daß der Chip von außen nicht sichtbar ist und der Chip keinen mechanischen Belastungen ausgesetzt ist.

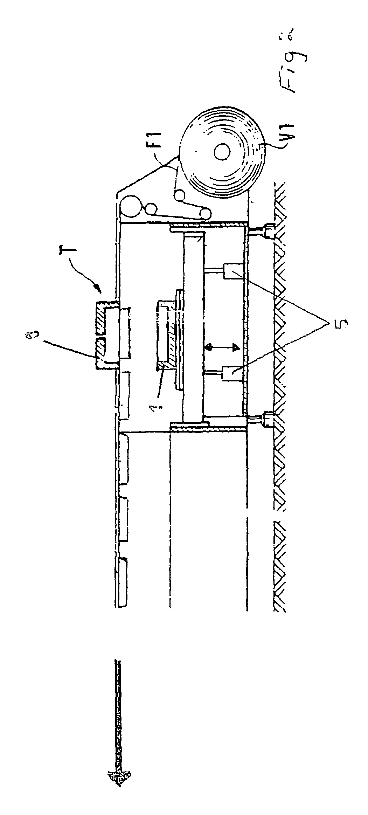

In **Figur 2** ist ein Teil einer erfindungsgemäßen Verpackungsmaschine, die Tiefziehstation, dargestellt. Die Folie F1 wird von einer Rolle V1 abgerollt und z. B. mit einem Kettenantrieb zur Tiefziehstation T transportiert. Dort wird die Folie fixiert und mit Heizelementen 9 erwärmt, wobei das Erwärmen der Folie auch vor der Tiefziehstation erfolgen kann. Das erfindungsgemäße Werkzeug 1 befindet sich auf einer Hubvorrichtung 5, mit der es angehoben und abgesenkt wird. Sobald das Werkzeug 1 an der Hubvorrichtung fixiert wird, werden über eine Sende- und Empfangsanlage die Daten auf dem Sensorchip 2, der sich in dem Werkzeug 1 befindet, abgefragt. Diese Daten werden sodann mit einem Computer verarbeitet und dieser Computer steuert sodann die automatische Einstellung der Maschinenparameter, wie beispielsweise des oberen und unteren Totpunktes der Hubvorrichtung. Unter oberem und unterem Totpunkt wird die obere bzw. untere Maximalstellung des Hubes verstanden.

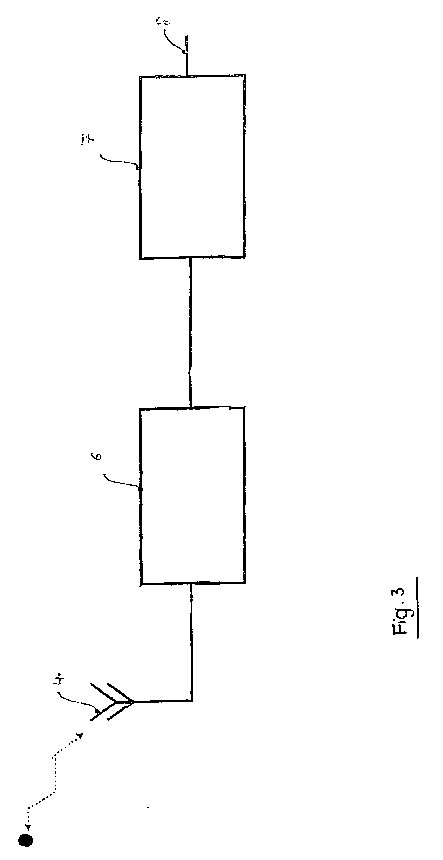

**Figur 3** ist eine schematische Darstellung einer Einrichtung zur Datenerfassung und Verarbeitung gemäß der vorliegenden Erfindung dargestellt. Die Sende- und Empfangsanlage 4 ist bidirektional über einen Verstärker 6 mit einem Computer 7 ebenfalls bidirektional verbunden. Dieser Computer 7 verarbeitet die empfangenen Daten und leitet diese über ein Interface 8 an die Steuerelektronik der Verpackungsmaschine weiter, die die Einstellung der Maschinenparameter vornimmt und diese Stellung wiederum an den Computer 7 zurückmeldet. Der Computer ermittelt über einen Soll-Ist-Vergleich, ob die Einstellungen richtig sind und gibt erst dann die Maschine frei. Analog funktioniert auch die Überprüfung, ob das eingesetzte Werkzeug zu der Verpackungsmaschine bzw. den Gegenstücken passend ist.

## Patentansprüche

1. Verfahren zum automatischen Einstellen won Maschinenparametern, insbesondere unter Verwendung einer Verpackungsmaschine, bei der ein Werkzeug (1) mit einer Hubvorrichtung (5) angehoben und abgesenkt wird, wobei in das Werkzeug ein Sensor-Chip (2) eingebaut ist, der einen beschreib- und abfragbaren Datenspeicher aufweist, auf dem Daten gespeichert sind, die zur Kennung des Werkzeuges dienen, wobei in dem Sensor-Chip (2) Daten gespeichert sind, **dadurch gekennzeichnet, dass** die in dem Sensor-Chip (2) gespeicherten Daten Soll-Werte für die automatische Einstellung von verstellbaren Maschinenparametem beinhalten und zum Abgleich mit den Daten eines zweiten, der Verpackungsmaschine zugeordneten Datenspeichers verwendet werden, dessen Daten als Istwert für einen Istwert-Sollwert-Vergleich dienen, wobei die Steuerung der Verpackungsmaschine so ausgelegt ist, dass diese nicht in Betrieb nehmbar ist, wenn die Ist-Werte von den Sollwerten abweichen,

2. Verfahren nach Anspruch 1, **dadurch gekennzeichnet, dass** der Sensor-Chip in einem abgeschlossenen Hohlraum vorgesehen ist oder außen am Werkzeug angebracht ist.

3. Verfahren nach einem der vorhergehenden Ansprüche, **dadurch gekennzeichnet, dass** das Werkzeug ein Tiefzieh-, Siegel- oder Schneidwerkzeug ist.

4. Verfahren nach einem der vorhergehenden Ansprüche, **dadurch gekennzeichnet, dass** die Verpackungsmaschine eine elektronische Steuerung aufweist, wobei die elektronische Steuerung aufgrund der Kennung des Werkzeuges automatisch gewisse Maschinenparameter einstellt.

5. Verfahren nach einem der vorhergehenden Ansprüche, **dadurch gekennzeichnet, dass** zumindest beim Umrüsten der Verpackungsmaschine die Daten des Datenspeichers des Werkzeuges (1) abgefragt werden und dann über eine elektronische Steuerung die einstellbaren Maschinenparameter entsprechend den Sollwerten automatisch eingestellt werden.

6. Verfahren nach einem der vorhergehenden Ansprüche, **dadurch gekennzeichnet, dass** über einen Soll-Ist-Vergleich die Einstellung der Maschinenparameter mindestens einmal überprüft wird.

7. Verfahren nach einem der vorhergehenden Ansprüche, **dadurch gekennzeichnet, dass** die einzustellenden Maschinenparameter zumindest der obere und der untere Totpunkt der Hubvorrichtung sind.

## Claims

1. Method for automatically setting machine parameters, in particular using a packaging machine, in which a tool (1) is raised and lowered by a lifting apparatus (5), with the tool (1) having an integrated sensor chip (2) which has a data memory which can be written to and interrogated and in which data which serves to identify the tool is stored, with data being stored in the sensor chip (2), **characterized in that** the data stored in the sensor chip (2) contains setpoint values for automatically setting adjustable machine parameters and is used for comparison with the data of a second data memory which is associated with the packaging machine and whose data serves as the actual value for an actual value/setpoint value comparison, with the control system of the packaging machine being designed such that said packaging machine cannot be started when the actual values differ from the setpoint values.

2. Method according to Claim 1, **characterized in that** the sensor chip is provided in a closed hollow space or is fitted on the outside of the tool.

3. Method according to either of the preceding claims, **characterized in that** the tool is a deep-drawing tool, a sealing tool or a cutting tool.

4. Method according to one of the preceding claims, **characterized in that** the packaging machine has an electronic control system, with the electronic control system automatically setting certain machine parameters on the basis of identification of the tool.

5. Method according to one of the preceding claims, **characterized in that** the data in the data memory of the tool (1) is retrieved at least when the packaging machine is retooled, and the settable machine parameters are then automatically set in accordance with the setpoint values by means of an electronic control system.

6. Method according to one of the preceding claims, **characterized in that** setting of the machine parameters is checked at least once by means of a setpoint/actual value comparison.

7. Method according to one of the preceding claims, **characterized in that** the machine parameters to be set are at least the top and the bottom dead centre of the lifting apparatus.

## Revendications

1. Procédé pour régler automatiquement les paramètres d'une machine, notamment en utilisant une machine d'emballage, avec lequel un outil (1) est levé et descendu avec un dispositif de levage (5), une puce de détection (2) étant intégrée dans l'outil, laquelle présente une mémoire de données pouvant être écrite et lue, sur laquelle sont enregistrées des données qui servent à l'identification de l'outil, des données étant enregistrées dans la puce de détection (2), **caractérisé en ce que** les données enregistrées dans la puce de détection (2) contiennent des valeurs de consigne pour le réglage automatique des paramètres réglables de la machine et qui sont utilisées pour l'harmonisation avec les données d'une deuxième mémoire de données associé avec la machine d'emballage, dont les données servent de valeurs réelles pour une comparaison valeur réelle/valeur de consigne, la commande de la machine d'emballage étant conçue de telle sorte que celle-ci ne peut pas être mise en service lorsque les valeurs réelles sont différentes des valeurs de consigne.

2. Procédé selon la revendication 1, **caractérisé en ce que** la puce de détection est prévue dans un espace creux fermé ou montée à l'extérieur sur l'outil.

3. Procédé selon l'une des revendications précédentes, **caractérisé en ce que** l'outil est un outil d'emboutissage, de scellement ou de découpe.

4. Procédé selon l'une des revendications précédentes, **caractérisé en ce que** la machine d'emballage présente une commande électronique, la commande électronique réglant automatiquement certains paramètres de la machine en se basant sur l'identification de l'outil.

5. Procédé selon l'une des revendications précédentes, **caractérisé en ce que** les données de la mémoire de données de l'outil (1) sont interrogées au moins lors du changement d'outillage de la machine d'emballage et les paramètres réglables de la machine sont ensuite réglés automatiquement par le biais d'une commande électronique conformément aux valeurs de consigne.

6. Procédé selon l'une des revendications précédentes, **caractérisé en ce que** le réglage des paramètres de la machine est contrôlé au moins une fois par le biais d'une comparaison consigne/réel.

7. Procédé selon l'une des revendications précédentes, **caractérisé en ce que** les paramètres à régler de la machine sont au moins les points morts haut et bas du dispositif de levage.
